Europäisches Patentamt

European Patent Office

Office européen des brevets

(19)

(11) Veröffentlichungsnummer : **0 297 079 B1**

# (12) EUROPÄISCHE PATENTSCHRIFT

(45) Veröffentlichungstag der Patentschrift :
04.03.92 Patentblatt 92/10

(51) Int. Cl.⁵ : **H02H 11/00, H02H 1/00**

(21) Anmeldenummer : **88890083.4**

(22) Anmeldetag : **01.04.88**

(54) **Einrichtung zur Steuerung und Überwachung einer elektrischen Energieverteilungsanlage.**

(30) Priorität : **25.06.87 AT 1600/87**

(43) Veröffentlichungstag der Anmeldung :
**28.12.88 Patentblatt 88/52**

(45) Bekanntmachung des Hinweises auf die
Patenterteilung :
**04.03.92 Patentblatt 92/10**

(84) Benannte Vertragsstaaten :
**BE CH DE ES FR GB GR IT LI LU NL SE**

(56) Entgegenhaltungen :
**EP-A- 0 103 151**
**EP-A- 0 255 505**
**US-A- 4 517 619**

(56) Entgegenhaltungen :
**JOURNAL A, Band 25, Nr. 4, Oktober 1984,**
**Seiten 201-208, Antwerpen, BE; P.L. SCHELLE-**
**KENS: "The use of local area networks in**
**distributed process control systems"**
**IEEE TRANSACTIONS ON POWER APPARA-**
**TUS AND SYSTEMS, Band 99, Nr. 1, Januar**
**1980, Seiten 318-326, IEEE, New York, US; T.**
**TAKAGI et al.: "Development of an intrasta-**
**tion optical-fiber data transmission system for**
**electric power systems"**

(73) Patentinhaber : **Sprecher Energie Österreich**
**Gesellschaft m.b.H.**
**Franckstrasse 51**
**A-4020 Linz (AT)**

(72) Erfinder : **Raffeiner, Erwin**
**Althauserstrasse 7**
**A-4230 Pregarten (AT)**

(74) Vertreter : **Rossboth, Werner Heinz**
**c/o Sprecher Energie Österreich Gesellschaft**
**m.b.H. Franckstrasse 51**
**A-4020 Linz (AT)**

**Beschreibung**

Die Erfindung bezieht sich auf eine Einrichtung zur Steuerung und Überwachung einer elektrischen Energieverteilungsanlage, insbesondere einer Hochspannungsschaltanlage in Freiluft, mit mehreren, von einer Schaltstation aus gesteuerten und überwachten Schaltfeldern und Übertragung von in Mikroprozessoren mit Speicher-Einheiten verarbeiteten digitalen Signalen zwischen Schaltstation und den Schaltfeldern, wobei die mindestens drei Schaltgeräteantriebskästen je eines Schaltfeldes durch einen bidirektionalen Lichtwellenleiter miteinander verbunden sind, der an eine in der Schaltstation befindliche Steuer- und Überwachungs-Einheit mit Zeit-Einheit und wenigstens einem Mikroprozessor je Schaltfeld angeschlossen ist, wobei weiters die Umsetzung der digitalen Signale in den Schaltgeräteantriebskästen erfolgt und die elektrischen Signale zur Steuerung des jeweiligen Schaltfeldes und Rückmeldung an die Steuer- und Überwachungs-Einheit in einem vereinheitlichten, in den Schaltgeräteantriebskästen vorhandenen Mikroprozessor-System ausgewertet werden. Eine Einrichtung dieser Art ist in EP-A-0255505 beschrieben. Dieses Dokument fällt unter Artiked 54 (3) EPÜ.

Aus der EP-OS 0 103 151 ist ein Verfahren zum Betrieb einer elektrischen Energieverteilungsanlage bekannt, bei dem zur Durchführung leittechnischer Funktionen sämtliche Schaltfelder durch wenigstens einen Licht- oder Drahtleiter mit einer Schaltstation sternförmig verbunden sind und zum Zwecke des Schaltfehlerschutzes ein bestimmtes Schaltfeld ebenfalls durch Licht- oder Drahtleiter mit allen übrigen Schaltfeldern sternförmig verbunden ist. Unter der Bezeichnung Schaltfeld wird dabei eine Außenstation der Schaltstation, z.B. ein Steuerschrank, verstanden. Aus der Zeichnung der EP-OS ist ersichtlich, daß es sich bei den Lichtleitern um bidirektionale Lichtleiter handeln kann. Der für den Schaltversagerschutz, die Meldung oder Messung erforderliche Datentausch zwischen Außenstation und den Schaltgeräteantriebskästen oder Klemmkästen der elektrischen Betriebsmittel der Energieverteilungsanlage, sowie auch jener für die Schaltbefehle von der Schaltstation zu den Außenstationen erfolgt auf herkömmliche Art über Drahtleitungen mit allen ihren Nachteilen. Zur Verarbeitung der digitalen Signale sind in der Schaltstation und den Außenstationen Mikroprozessoren vorgesehen.

In der EP-OS 0 103 137 wird eine Einrichtung zum schaltfehlergeschützten Betätigen einer aus mehreren Schaltfeldern bestehenden Schaltanlage in einem elektrischen Energieverteilungsnetz beschrieben, bei der in jedem Schaltfeld ein Schaltfeldprozessor und einem bestimmten Schaltfeld zusätzlich ein Bildsammelprozessor vorgesehen ist. Der Bildsammelprozessor ist mit den Schaltfeldprozessoren über bidirektionale Lichtleiter oder unidirektionale Zweidrahtleitungen sternförmig verbunden. Über digitale, im Bildsammelprozessor verarbeitete Signale wird sichergestellt, daß durch die Schaltfeldprozessoren keine Fehlschaltung eingeleitet werden kann. Die Verbindungen zwischen den Schaltfeldprozessoren und den Schaltgeräteantriebskästen, z.B. dem Leistungsschalterantrieb, den Trennschalterantrieben und Erdungsschalterantrieben, des jeweiligen Schaltfeldes erfolgen auf herkömmliche Art über nachteilige Drahtleitungen.

Überwachungs-Einheiten mit Mikroprozessoren in verschiedenen Hierachieebenen und Speicher-Einheiten sind aus den DE-OS 3 026 126 und DE-OS 3 132 730 bekannt. Die Überwachungs-Einheiten in der zentralen Schaltstation können dabei über einen Lichtleiter-Zentralbus mit den Außenstationen der Schaltfelder verbunden sein. Von den Außenstationen zu den Schaltgeräteantriebskästen und Klemmkästen der elektrischen Betriebsmittel der Energieverteilungsanlage führen wiederum nachteilige Drahtleitungen.

Bei bekannten Einrichtungen zur Steuerung und Überwachung von Hochspannungsschaltanlagen in Freiluft erfolgt die Umsetzung der digitalen Signale in den Schaltgeräteantriebskästen durch optische Viertorkoppler mit integrierten Empfangs- und Sende-Dioden. Diese optischen Viertorkoppler ermöglichen zwar ein verlustarmes Auskoppeln der digitalen optischen Signale aus dem Lichtwellenleiter, so daß dieser von Antriebskasten zu Antriebskasten, von erforderlichen Steckanschlüssen abgesehen, in einem durchgezogen werden kann, jedoch sind durch das Auskoppeln Verluste vorhanden, welche die Zahl der miteinander verbundenen Schaltgeräteantriebskästen begrenzen.

Durch die in der Folge aufgezeigte erfindungsgemäße Ausführung wird bezweckt, eine Einrichtung der eingangs genannten Art zu schaffen, bei welcher ein einfacher und vereinheitlicher, wirtschaftlicher Aufbau, ohne optische Koppler verwenden zu müssen, möglich ist, die eine hohe Ausfallsund Betriebssicherheit aufweist und zur Vor-Ort-Steuerung der Schaltgeräte keine Steuerschränke in den Schaltfeldern erfordert. Unter Schaltfeld ist dabei die Gesamtheit des Sammelschienenabganges einer Energieverteilungsanlage mit sämtlichen elektrischen Betriebsmitteln zu verstehen.

Dies wird dadurch erreicht, daß im bidirektionalen Lichtwellenleiter für jede Übertragungsrichtung eine Lichtwellenleitfaser vorgesehen ist und in wenigstens einem Schaltgeräteantriebskasten je eines Schaltfeldes ein kombiniertes Verteil- und Mischelement angeordnet ist, dessen erster Eingang mit einer Sende-Diode und erster Ausgang mit einer Empfangs-Diode der Steuer- und Überwachungs-Einheit, zweiter Eingang mit der Sende-Diode und zweiter Ausgang mit der Empfangs-Diode des einen Schaltgeräteantriebskastens sowie dritter Eingang mit der Sende-Diode eines zweiten Schaltgeräteantriebskastens und dritter Ausgang mit der Empfangs-Diode eines dritten Schaltgeräteantriebskastens durch je eine Lichtwellen-leitfaser in Lichtverbindung stehen, wobei die Empfangs-Diode des zweiten Schaltgeräteantriebskastens und die Sende-Diode des dritten Schaltgeräteantriebskastens ebenfalls durch eine Lichtwellenleitfaser verbunden sind und mit den Sende und Empfangs-Dioden weiterer, gegebenenfalls vorhandener Schaltkästen einen linearen Lichtleitbus bilden.

Sämtliche Steuer-, Melde- und Überwachungsfunktionen, wie Schaltbefehle, Schaltfehlerschutz, Schaltautomatik, Stellungs- und Gefahrenmeldung sowie gegebenenfalls Meßdaten, können dadurch über einen Lichtwellenleiter mit zwei Lichtleitfasern vom Schaltfeld zur Schaltstation und umgekehrt übertragen werden, wobei keine Steuerschränke oder Außenstationen sowie optische Koppler erforderlich sind.

Die Steuerung und Überwachung des funktionell wichtigsten elektrischen Betriebsmittels jedes Schaltfeldes, beispielsweise des Leistungsschalters oder Lastschalters, kann dabei über das Verteil- und Mischelement direkt an die Steuer- und Überwachungs-Einheit in der Schaltwarte angeschlossen werden, wogegen die Steuerung und Überwachung der anderen elektrischen Betriebsmittel, wie Trennschalter und Erdungsschalter, zu einem Lichtleitbus miteinander verbunden sind und ebenfalls über das Verteil- und Mischelement an die Steuer- und Überwachungs-Einheit angeschlossen sind. Dadurch ergibt sich der Vorteil, daß bei einem Schaden im Lichtleitbus durch äußere Einwirkungen, die Steuerung und Überwachung des Leistungsschalters oder Lastschalters voll funktionsfähig bleibt. Durch den Entfall der optischen Koppler kann außerdem die Zahl der zu steuernden und überwachenden elektrischen Betriebsmittel wesentlich erhöht werden, weil die digitalen Signale von jeder Sende- Diode im Lichtleitbus mit voller Lichtintensität neu eingespeist werden.

Bevorzugterweise besteht der bidirektionale Lichtwellenleiter aus einem Hybridkabel mit zwei Lichtleitfasern und mehreren elektrischen Leitern für Speisekreise.

Dadurch ergibt sich einerseits der Vorteil, daß die Lichtleitfasern besser gegen mechanische Einwirkungen geschützt sind und leichter verlegt werden können, anderseits ein minimaler Verkabelungsaufwand, da über die Lichtleitfasern und wenigen elektrischen Leiter sämtliche Steuer-, Überwachungsund Speisekreise, beispielsweise für die Versorgungsgleichspannung der Mikroprozessoren, geführt werden können.

Die Lichtleitfasern können dabei aus einem Multimodewellenleiter mit Stufenprofil zur paketweisen Gleichwellenlängenübertragung von digitalen Lichtsignalen mit einer Wellenlänge von 820 nm bestehen.

Bei dieser Wellenlänge besitzen die Empfangs-Dioden die höchste Quantenausbeute und die Lichtleitfasern eine relativ kleine Dämpfung.

Um eine möglichst hohe Betriebssicherheit bei der Übertragung der digitalen Lichtsignale erreichen zu können, verteilt das kombinierte Verteil- und Mischelement die Lichtintensität des ersten Einganges auf den zweiten und dritten Ausgang in einem vorbestimmten Verhältnis.

In einer bevorzugten Ausführungsform entspricht die Lichtintensität am zweiten Ausgang etwa der am dritten Ausgang des Verteil- und Mischelementes, wodurch es möglich wird, einheitliche Sende- und Empfangs-Dioden zu verwenden.

Das kombinierte Verteil- und Mischelement kann auch zusätzliche Ein- und Ausgänge besitzen, wodurch es möglich wird, einen zweiten linearen Lichtleitbus für untergeordnete elektrische Betriebsmittel eines Schaltfeldes zu bilden.

Zur Optimierung der Funktionszuverlässigkeit des wichtigsten elektrischen Betriebsmittels im jeweiligen Schaltfeld, ist das kombinierte Verteil- und Mischelement im Schaltgeräteantriebskasten des Leistungsschalters- oder Lastschalters angeordnet.

Leistungsschalter oder Lastschalter kombiniert mit Sicherungen haben bekanntlich nicht nur die Aufgabe, betriebsmäßige Schaltungen durchzuführen, sondern auch im Fehlerfall auftretende Kurzschlüsse abzuschalten und dadurch Schäden in Schaltanlagen oder auf Leitungen zu vermeiden.

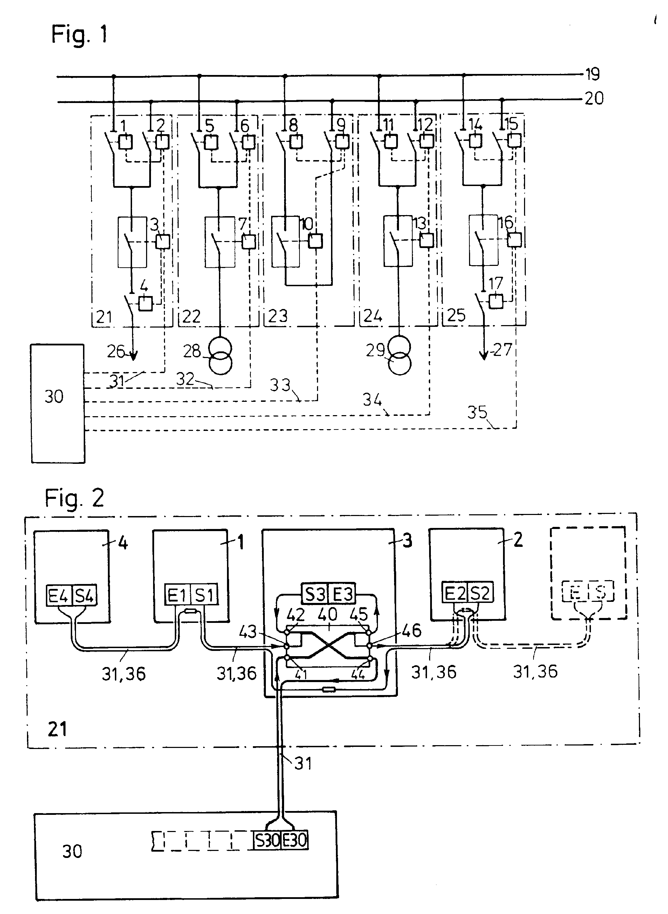

Im folgenden werden an Hand der beiliegenden Zeichnung Ausführungsbeispiele des Erfindungsgegenstandes näher erläutert: Es zeigen Fig. 1 das einpolige Schaltbild einer fünffeldrigen Hochspannungsschaltanlage mit schematisch dargestellten Lichtwellenleiterverbindungen und Fig. 2 das Lichtwellenleiternetz eines Schaltfeldes. Aus dem in Fig. 1 dargestellten einpoligen Schaltbild einer Hochspannungsanlage für Freiluft sind zwei Sammelschienen 19, 20 erkennbar, an welche je über zwei Trennschalter fünf strichpunktiert gezeichnete Schaltfelder 21...25 angeschlossen sind. Im Schaltfeld 23 können die Sammelschienen 19, 20 über einen Leistungsschalter gekuppelt werden. Die Schaltfelder 22, 24 sind über Leistungsschalter je an Transformatoren 28, 29 angeschlossen und speisen die Sammelschienen 19, 20.

Zwei Schaltfelder 26, 27 führen über Leistungsschalter, Abgangstrennschalter und Leitungen 26, 27 zu Verbrauchern. Zur besseren Übersichtlichkeit des Schaltbildes sind in Fig. 1 Erdungsschalter, welche zur Personensicherheit bei Revisionen von Schaltfeldern vorgesehen sind, Meßwandler und Überspannungsableiter nicht dargestellt. Doppelte Sammelschienen 19, 20 wählt man bekanntlich aus Gründen der Versorgungssicherheit bzw. Verfügbarkeit elektrischer Energie. Sämtliche Leistungsschalter und Trennschalter sind über in Schaltgeräteantriebskästen 1...17 untergebrachte Antriebe, z.B. Motor- oder Federkraftspeicher-Antriebe, Vor-

EP 0 297 079 B1

Ort, von der Schaltstation oder einer Fernwirkanlage betätigbar. Zur Vermeidung von Fehlschaltungen und zum Schutz der Hochspannungsschaltanlage bei Störungen, z.B. Kurzschlüsse durch Blitzeinschläge, und Überlastungen sind Schutzmaßnahmen, beispielsweise Schaltfehlerschutz, Kurzunterbrechung, Differentialschutz u.a., vorgesehen.

Nicht nur diese Steuerfunktion, sondern auch sämtliche Melde-, Meß- und Schutzfunktionen werden in der Schaltstation von einer Steuer- und Überwachungs-Einheit 30 abgewickelt. Die Datenübertragung von der Schaltstation zu den Schaltgeräteantriebskästen 1...17 und umgekehrt, gegebenenfalls von Klemmkästen an Meßwandlerrahmen, erfolgt durch bidirektionale Lichtwellenleiter 31...35, welche in Fig. 1 strichliert angedeutet sind. Innerhalb eines jeden Schaltfeldes 21...25 sind die Schaltgeräteantriebskästen über den Lichtwellenleiter miteinander verbunden, im Schaltfeld 21 beispielsweise die Schaltgeräteantriebskästen 1, 2, 3, 4. Vom Schaltgeräteantriebskasten 3 führt dann der Lichtwellenleiter 31 zur Steuer- und Überwachungs-Einheit 30. In Fig. 2 ist das Lichtwellenleitungsnetz des Schaltfeldes 21 gemäß Fig. 1 dargestellt. Die Steuer- und Überwachungs-Einheit 30 besteht aus fünf Mikroprozessoren, zwei Speicher-Einheiten und einer quarzgesteuerten Zeit-Einheit, welche durch Busleitungen miteinander verbunden sind. Die Speicher-Einheiten dienen der Protokollierung sowie Steuerung und stellen die Zentraleinheiten (CPU) dar, welche den Datenfluß regeln und speichern. Als prozessorgeführte Ein- und Ausgabeeinheiten sind die Mikroprozessoren über Empfangs- und Sende-Dioden je an einen bidirektionalen Lichtwellenleiter mit je einer Lichtwellenleitfaser pro Übertragungsrichtung angeschlossen, der zum Schaltgeräteantriebskasten des Leistungsschalter des jeweiligen Schaltfeldes führt. In Fig. 2 sind die Sende-Dioden S30 und Empfangs-Dioden E30 für das Schaltfeld 21 gezeichnet, die übrigen Dioden für die Schaltfelder 22...25 sind nur strichliert angedeutet, welche mit je einer Lichtleitfaser des bidirektionalen Lichtwellenleiters 31 verbunden sind, der zu dem im Schaltgeräteantriebskasten 3 montierten kombinierten Verteil- und Mischelement 40 mit drei Eingängen 41, 42, 43 und drei Ausgängen 44, 45, 46 führt. Die Sende-Diode S30 ist dabei an den ersten Eingang 41 und die Empfangs-Diode E30 an den ersten Ausgang 44, bevorzugterweise über Steckanschlüsse, angeschlossen. Der zweite Eingang 42 ist mit der Sende-Diode S3 und der zweite Ausgang 45 mit der Empfangs-Diode E3 lichtwellenleitend verbunden, wobei die Dioden integrierte Bestandteile des Mikroprozessorsystems im Schaltgeräteantriebskasten 3 des Leistungsschalters sind.

An den dritten Eingang 43 und dritten Ausgang 46 ist ein linearer Lichtleitbus 36 angeschlossen, der aus dem bidirektionalen Lichtwellenleiter 31 mit zwei Lichtwellenleitfasern besteht. Die Lichtwellenleitverbindung führt vom Ausgang 46 zur Empfangs-Diode E2 des Schaltgeräteantriebskastens 2 des einen Sammelschienentrennschalters, von der Sende-Diode S2 zur Empfangs-Diode E4 des Schaltgeräteantriebskastens 4 des Ausgangstrennschalters, wobei die Lichtwellenleitfaser über die Schaltgeräteantriebskästen 3 und 1 geführt ist und in diesen eine Steckverbindung besitzt, von der Sende-Diode S4 zur Empfangs-Diode E1 des Schaltgeräteantriebskastens 1 des anderen Sammelschienentrennschalters und von der Sende-Diode S1 zum Eingang 43. Sämtliche Dioden sind wiederum integrierte Bestandteile des Mikroprozessorsystems im jeweiligen Schaltgeräteantriebskasten 1; 2; 4 und bestehen aus LED- bzw. PIN-Dioden.

Zwischen der Steuer- und Überwachungs-Einheit 30 und den Schaltgeräteantriebskästen 1...4 erfolgt in Richtung der Pfeile eine serielle Datenübertragung. In der Steuer- und Überwachungs-Einheit 30 werden sämtliche Steuerbefehle von der Fernwirkanlage, Schaltwarte der Schaltstation oder den Schaltgeräteantriebskästen 1...4 nach gespeicherten Programmen, z.B. Kontrolle Schaltfehlerschutz, Schaltautomatik, Schaltverriegelung, Synchronisierung, ausgewertet und umgesetzt. Gleichermaßen werden die Rückmeldungen verarbeitet, dann angezeigt und protokolliert. Bevorzugterweise ist die Steuer- und Überwachungs-Einheit 30 modular durch Einschubeinheiten in einem Gestellrahmen aufgebaut, wobei für jedes Schaltfeld eine Einschubeinheit vorhanden ist, die an ihrer Frontblende ein Blindschaltbild mit LED-Anzeige für die Stellungsrückmeldung der Schaltgeräte besitzt.

Die digitalen optischen Signale werden im Verteil- und Mischelement 40 auf die Ausgänge 45, 46, vorzugsweise mit gleicher Lichtintensität, verteilt und von den Empfangs-Dioden E3; E2 empfangen. Die Mikroprozessorsysteme in den Schaltgeräteantriebskästen 3; 2 verarbeiten die in elektrische Signale umgewandelten optischen Signale, geben die Steuerbefehle zu den Schaltspulen der Antriebe je nach Programm und leiten die Signale und Rückmeldungen durch Aktivierung der Sende-Dioden S3, S2 über das kombinierte Verteil- und Mischelement 40, welches die Signale wieder mischt, direkt bzw. durch den Lichtleitbus 36 zurück zur Empfangs-Diode E30.

Der bidirektionale Lichtwellenleiter 31 kann aus einem Hybridkabel mit zwei Lichtwellenleitfasern und beispielsweise vier Kupferleitern bestehen. Über nur ein Kabel von der Steuer- und Überwachungs-Einheit 30 zum jeweiligen Schaltfeld 21...25 können dann nicht nur das Lichtwellenleitnetz, sondern auch Speisekreise für die Antriebsmotoren und Auslösespulen sowie Mikroprozessorsysteme geführt werden. Der Verkabelungsaufwand kann dadurch optimiert werden und ist auch noch wirtschaftlich, wenn man für die Meßdatenübertragung zusätzliche Lichtwellenleiterverbindungen, gegebenenfalls im gleichen Hybridkabel, pro Schaltfeld 21...25 vor-

4

sieht.

Die Anwendung der Einrichtung zur Steuerung und Überwachung ist nicht auf Hochspannungsschaltanlagen beschränkt, sondern auch bei metallgekapselten Mittelspannungsanlagen, druckgasisolierten Schaltanlagen oder der elektrischen Steuerung von Industrieprozessen auf wirtschaftliche Art einsetzbar. Die Mikroprozessor-Systeme befinden sich dann im Steuerteil der jeweiligen Schaltzelle bzw. in den Antriebskästen oder Steuerteilen der druckgasisolierten Schaltanlage bzw. Maschine.

**Patentansprüche**

1. Einrichtung zur Steuerung und Überwachung einer elektrischen Energieverteilungsanlage, insbesondere einer Hochspannungsanlage in Freiluft, mit mehreren, von einer Schaltstation aus gesteuerten und überwachten Schaltfeldern (21...25) und Übertragung von in Mikroprozessoren mit Speicher-Einheiten verarbeiteten digitalen Signalen zwischen Schaltstation und den Schaltfeldern (21...25), wobei die mindesten drei Schaltgeräteantriebskästen (Z.B. 1;2;3) je eines Schaltfeldes durch einen bidirektionalen Lichtwellenleiter miteinander verbunden sind, der an eine in der Schaltstation befindliche Steuer- und Überwachungs-Einheit (30) mit Zeit-Einheit und wenigstens einem Mikroprozessor je Schaltfeld (21...25) angeschlossen ist, wobei weiters die Umsetzung der digitalen Signale in den Schaltgeräteantriebskästen (Z.B. 1;2;3) erfolgt und die elektrischen Signale zur Steuerung des jeweiligen Schaltfeldes und Rückmeldung an die Steuer- und Überwachungs-Einheit (30) in einem vereinheitlichten, in den Schaltgeräteantriebskästen vorhandenen Mikroprozessor-System ausgewertet werden, und im bidirektionalen Lichtwellenleiter (31... 35) für jede Übertragungsrichtung eine Lichtwellenleitfaser vorgesehen ist und in wenigstens einem Schaltgeräteantriebskasten (3; 7; 10; 13; 16) je eines Schaltfeldes (21...25) ein kombiniertes Verteil- und Mischelement (40) angeordnet ist, dessen erster Eingang (41) mit einer Sende- Diode (S30) und erster Ausgang (44) mit einer Empfangs-Diode (E30) der Steuer- und Überwachungs-Einheit (30), zweiter Eingang (42) mit der Sende-Diode (S3) und zweiter Ausgang (45) mit der Empfangs-Diode (E3) des einen Schaltgeräteantriebskastens (3; 7; 10; 13; 16) sowie dritter Eingang (43) mit der Sende-Diode (S1) eines zweiten Schaltgeräteantriebskastens (1; 5; 8; 11; 14) und dritter Ausgang (46) mit der Empfangs-Diode (E2) eines dritten Schaltgeräteantriebskastens (2; 6; 9; 12; 15) durch je eine Lichtwellenleitfaser in Lichtverbindung stehen, wobei die Empfangs-Diode (E1) des zweiten Schaltgeräteantriebskastens (1; 5; 8; 11; 14) und die Sende-Diode (S2) des dritten Schaltgeräteantriebskastens (2; 6; 9; 12; 15) ebenfalls durch eine Lichtleitfaser verbunden sind und mit den Sende- und Empfangs-Dioden weiterer, gegebenenfalls vorhandener Schaltkästen einen linearen Lichtleitbus (36) bilden.

2. Einrichtung nach Anspruch 1, dadurch gekennzeichnet, daß der bidirektionale Lichtwellenleiter (31...35) aus einem Hybridkabel mit zwei Lichtwellenleitfasern und mehreren elektrischen Leitern für Speisekreise besteht.

3. Einrichtung nach Anspruch 1 oder 2, dadurch gekennzeichnet, daß die Lichtleitfasern aus einem Multimodewellenleiter mit Stufenprofil zur paketweisen Gleichwellenlängenübertragung von digitalen Lichtsignalen mit einer Wellenlänge von 820 nm besteht.

4. Einrichtung nach einem der Ansprüche 1 bis 3, dadurch gekennzeichnet, daß das kombinierte Verteil- und Mischelement (40) die Lichtintensität des ersten Einganges (41) auf den zweiten Ausgang (45) und dritten Ausgang (46) in einem vorbestimmten Verhältnis verteilt.

5. Einrichtung nach Anspruch 4, dadurch gekennzeichnet, daß die Lichtintensität am zweiten Ausgang (45) etwa der am dritten Ausgang (46) des kombinierten Verteil- und Mischelementes (40) entspricht.

6. Einrichtung nach einem der Ansprüche 1 bis 5, dadurch gekennzeichnet, daß das kombinierte Verteil- und Mischelement (40) zusätzliche Ein- und Ausgänge besitzt.

7. Einrichtung nach einem der Ansprüche 1 bis 6, dadurch gekennzeichnet, daß das Verteil- und Mischelement (40) im Schaltgeräteantriebskasten (3; 7; 10; 13; 16) des Leistungsschalters oder gegebenenfalls Lastschalters des jeweiligen Schaltfeldes (21...25) angeordnet ist.

**Claims**

1. Device for controlling and monitoring an electrical power distribution system, in particular an outdoor high-voltage switchgear, having a plurality of switch panels (21...25) controlled and monitored from a switching substation, and transmission between switching substation and the switch panels (21...25) of digital signals processed in microprocessors with memory units, the at least three switching unit drive boxes (for example: 1; 2; 3) of a switch panel being connected to one another by means of a bidirectional optical waveguide which is connected to a control and monitoring unit (30) located in the switching substation and having a timer unit and at least one microprocessor per switch panel (21...25), the conversion of the digital signals occurring, furthermore, in the switching unit drive boxes (for example: 1; 2; 3) and the electrical signals for controlling the respective switch panel and return information to the control and monitoring unit (30) being evaluated in a standardised microprocessor system present in the switching unit drive boxes and one optical fibre being provided in the bidirectional optical waveguide (31...35) for each transmission direction and in at least one switching unit drive box (3; 7; 10; 13; 16) of in each case one switch panel (21...25) a combined distribution and mixing element (40) being arranged, whose first input (41) is optically connected to a transmitting diode (S30) and first output (44) to a receiver diode (E30) of the control and monitoring unit (30), second input (42) to the transmitting diode (S3) and second output (45) to the receiving diode (E3) of the one switching unit drive box (3; 7; 10; 13; 16) as well as third input (43) to the transmitting diode (S1) of a second switching unit drive box (1; 5; 8; 11; 14) and third output (46) to the receiving diode (E2) of a third switching unit drive box (2; 6; 9; 12; 15) by means of one optical fibre in each case, the receiving diode (E1) of the second switching unit drive box (1; 5; 8; 11; 14) and the transmitting diode (S2) of the third switching unit drive box (2; 6; 9; 12; 15) being likewise connected by means of one optical fibre and forming a linear optical waveguide bus (36) with the transmitting and receiving diodes of further switching boxes which may be present.

2. Device according to Claim 1, characterised in that the bidirectional optical waveguide (31...35) consists of a hybrid cable having two optical fibres and a plurality of electrical conductors for feed circuits.

3. Device according to Claim 1 or 2, characterised in that the optical fibres consist of a multimode waveguide with stepped profile for common-channel transmission in packets of digital light signals with a wavelength of 820 nm.

4. Device according to one of Claims 1 to 3, characterised in that the combined distribution and mixing element (40) distributes the light intensity of the first input (41) to the second output (45) and third output (46) in a predetermined ratio.

5. Device according to Claim 4, characterised in that the light intensity at the second output (45) corresponds approximately to that at the third output (46) of the combined distribution and mixing element (40).

6. Device according to one of Claims 1 to 5, characterised in that the combined distribution and mixing element (40) has additional inputs and outputs.

7. Device according to one of Claims 1 to 6, characterised in that the distribution and mixing element (40) is arranged in the switching unit drive box (3; 7; 10; 13; 16) of the circuit breaker switch or possibly load transfer switch of the respective switch panel (21...25).

## Revendications

1. Dispositif pour commander et contrôler une installation de répartition d'énergie, en particulier une installation haute tension en plein air, avec plusieurs tableaux de distribution (21...25) commandés et contrôlés d'une station de distribution et pour la transmission de signaux numériques traités dans des microprocesseurs avec unités de mémoires entre la station de distribution et les tableaux de distribution (21...25), dans lequel les boîtiers de commande de distribution (par exemple 1, 2, 3) minimum au nombre de trois sont reliés chacun avec un tableau de distribution à l'aide d'un conducteur d'ondes optiques bidirectionnel qui est réuni à une unité de commande et de contrôle (30) avec une unité de temps et au moins un microprocesseur par tableau de distribution (21...25) se trouvant dans la station de distribution, dans lequel de plus la conversion des signaux numériques est réalisée dans les boîtiers de commande de distribution (par exemple 1, 2, 3) et les signaux électriques pour la commande des divers tableaux de distribution et le retour vers l'unité de commande et de contrôle (30), est traité dans un système unifié à microprocesseurs présent dans les boîtiers de commande de distribution, et dans lequel les conducteurs d'ondes lumineuses (31...35) bidirectionnels comportent une fibre conductrice d'ondes lumineuses pour chacune des directions de transmission et dans lequel au moins un boîtier de commande de distribution (3, 7, 10, 13, 16) de chacun des tableaux de distribution (21...25) comporte un élément de répartition et de mélange combiné (40), dont la première entrée (41), la première sortie (44), la deuxième entrée (42), la deuxième sortie (45), la troisième entrée (43) et la troisième sortie (46) sont reliées chacune par une fibre optique, la première entrée (41) avec la diode émettrice (S30) et la première sortie (44) avec la diode réceptrice (E30) de l'unité de commande et de contrôle (30), la deuxième entrée (42) avec la diode émettrice (S3) et la deuxième sortie (45) avec la diode réceptrice (E3) de l'un des boîtiers de commande de distribution (3, 7, 10, 13, 16), la troisième entrée (43) avec la diode émettrice (S1) d'un deuxième boîtier de commande de distribution (1, 5, 8, 11, 14), la troisième sortie (46) avec la diode réceptrice (E2) d'un troisième boîtier de commande de distribution (2, 6, 9, 12, 15), dans lequel la diode réceptrice (E1) du deuxième boîtier de commande de distribution (1, 5, 8, 11, 14) et la diode émettrice (S2) du troisième boîtier de commande de distribution (2, 6, 9, 12, 15) sont également réunies par une fibre optique et constituent avec les autres diodes émettrice et réceptrice des boîtiers de distribution existants, selon les cas un bus linéaire conducteur de lumière (36).

2. Dispositif selon la revendication 1, caractérisé en ce que les conducteurs d'ondes lumineuses (31...35) bidirectionnels sont constitués d'un câble hybride avec deux fibres optiques conductrices de la lumière et plusieurs conducteurs électriques pour le circuit d'alimentation.

3. Dispositif selon les revendications 1 ou 2, caractérisé en ce que les fibres optiques sont constitutées d'un conducteur multimode avec profil étagé pour la transmission de longueur d'ondes en paquet de signaux lumineux numériques avec une longueur d'ondes de 820 nanomètres.

4. Dispositif selon l'une des revendications 1 à 3, caractérisé en ce que l'élément de répartition et de mélange combiné (40) répartit l'intensité lumineuse de la première entrée (41) sur la seconde sortie (45) et sur la troisième sortie (46) dans une proportion prédéterminée.

5. Dispositif selon la revendication 4, caractérisé en ce que l'intensité lumineuse sur la seconde sortie (45) correspond à peu près à celle sur la troisième sortie (46) de l'élément combiné de répartition et de mélange (40).

6. Dispositif selon l'une des revendications 1 à 5, caractérisé en ce que l'élément combiné de répartition et de mélange (40) possède une entrée et une sortie supplémentaire.

7. Dispositif selon l'une des revendications 1 à 6, caractérisé en ce que l'élément de répartition et de mélange (40) est disposé dans le boîtier de commande de distribution (3, 7, 10, 13, 16), du commutateur de puissance ou selon les cas du commutateur de charge de chacun des tableaux de distribution (21...25).

## Fig. 1

## Fig. 2